# EUROPEAN PATENT APPLICATION

(11) **EP 1 380 915 A2**
(43) Date of publication of application: **14.01.2004**
(21) Application number: 02258755.4
(22) Date of filing: 19.12.2002
(51) Int. Cl.: G06F 1/00

(54) **Computer access control**

(30) Priority: 10.07.2002 KR 2002040081
(71) Applicant: SAMSUNG ELECTRONICS CO., LTD., Suwon-City, Kyungki-do (KR)
(72) Inventor: Ha, Jong-uk, Paldal-gu, Suwon-city, Kyungki-do (KR)
(74) Representative: Geary, Stuart Lloyd

(57) **Abstract**

A computer (2) uses a trace image booting password to control access to the computer. The computer (2) includes a sensing plane; a sensor unit (5) sensing a moving sensed unit (7) contacting the sensing plane; an image generator (11) generating a trace image along the movement of the sensed unit (7) as sensed by the sensor unit (5); and an image store (17) storing a predetermined image password based upon a predetermined image. The computer (2) further comprises a controller displaying (15) the predetermined image on a display screen (6) at booting time of the computer (2) to allow a user to move the sensed unit (7) in contact with the sensing plane over the displayed predetermined image, comparing a trace image generated by the image generator (11) along the moving trace of the sensed unit (7) by the user with the stored image password, and booting the computer (2) if the generated trace image corresponds to the stored image password.

## Description

The present invention relates to a method of controlling access to a computer system, the method comprising operating a computer system to receive access code data from user input means, compare the access code defined by said data with a pre-stored access code and grant further user access to the computer system in the event that said access codes match.

The use of access code to control access to computer systems is well known.

The access control can be provided at the BIOS level. In such a system, a access code can be set up by selecting a access code setting function from a menu provided by the BIOS setup program which which is typically run when the DEL is pressed during the initial phase of booting. The access code is stored in CMOS RAM, which is a non-volatile memory that is used to store setup information.

When a access code-protected computer system is turned on, power is supplied to the computer system and a POST (Post On Self Test) process is executed. During the POST process, a message requesting the user to insert the access code is displayed on the computer's monitor. If the access code input by the user corresponds to the access code stored in the computer system, the booting of the computer system is executed.

However, the conventional method of inputting setting up a access code is disadvantageous in that the user has to remember the access code and may write the access code on a piece of paper, for fear of forgetting it, because the access code is typically a combination of letters, numerals and other characters. Therefore, with the conventional access code system, there is the risk of the access code being forgotten or falling into the wrong hands, if written on a piece of paper. Furthermore, since the same access code is used for all users, the risk of the system being compromised is great.

A method according to the present invention is characterised in that the received access code data comprises the output of a graphical input device and said access codes comprise data defining curves. In this context "curve" includes straight lines and lines made up of a series of arcs and arc/straight line combinations.

Preferably, the method includes displaying a reference image on a screen to provide a reference for user input of said received access code data.

Preferably, the method includes displaying the curve represented by thereafter received access code data on a screen while said data is being received.

The method may be applied before or after the computer system's operating system.

According to the present invention, , there is also provide computer system including graphical user input means and a display, the computer system being programmed to perform a method according to the present invention.

Preferably, the graphical user input means and the display constitute a touch sensitive display screen.

Embodiments of the present invention will now be described, by way of excample, with reference to the accompanying drawings, in which:
Figure 1 shows a computer system according to the present invention;
Figure 2 is a control block diagram of the computer system shown in Figure 1; and
Figure 3 is a flowchart illustrating the operation of the computer system shown in Figure 1.

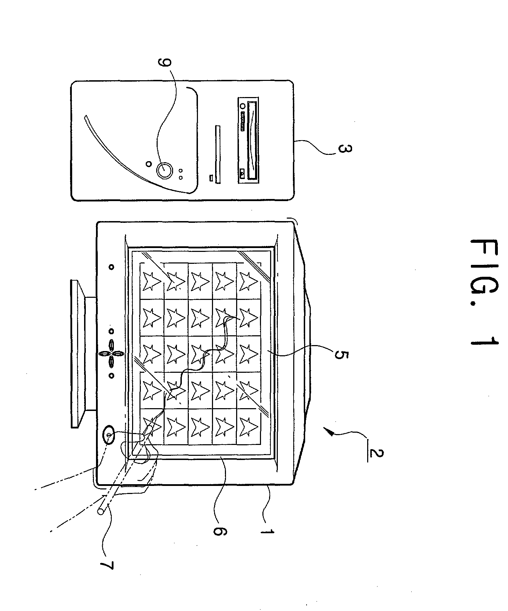

Referring to Figure 1, a computer system 2 comprises a monitor 1, which has a touch sensitive screen 6, including a sensor unit 5, and a CPU box 3 which receives position information from the sensor unit 5 and generates an image in dependence on the position information.

A stylus 7 is provided for "drawing" on the touch sensitive screen 6. However, a finger could be used.

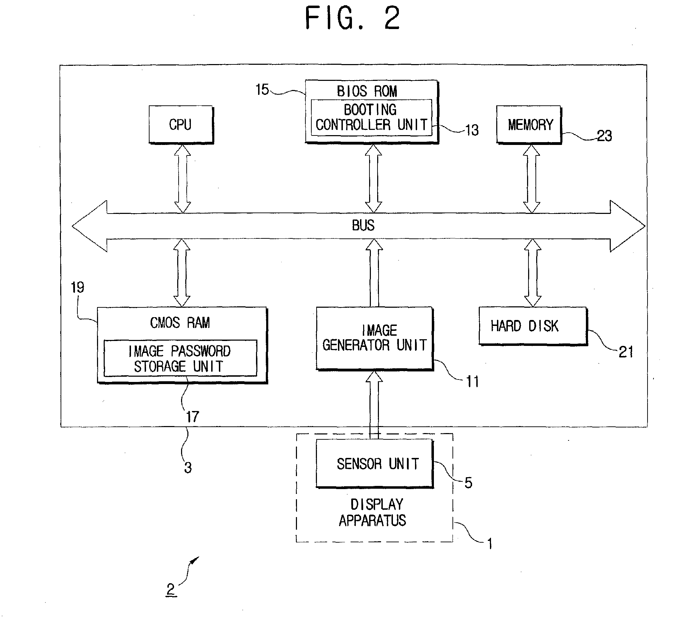

Referring to Figure 2, the computer system 2 comprises the sensor unit 5, an image generator unit 11 for generating a trace image in dependence on the movement of the stylus 7 across the sensor unit 5, an image-based access code storage unit 17 for storing image-based access codes based upon a predetermined image, and a boot controller unit 13 for displaying the predetermined image divided into a plurality of sections on the monitor 1, during booting of the computer system 2, and controlling the booting of the computer system 2 by comparing a trace image provided from the image generator unit 11 with the image-based access code stored in the image-based access code storage unit 17 to determine whether the two images match according to predetermined criteria.

The stored image-based access code comprises information on a start point section and an end point section of the predetermined sectioned image when the stylus 7 is moved across the displayed sectioned image for inputting a access code image, and information on traces corresponding to the path from the start section to the end section. Of course, the predetermined sectioned image can be selected and/or generated by a user.

The sensor unit 5 provides a sensing plane comprising a plurality of pressure sensors (not shown) installed at the intersections of columns and rows formed by structuring the display screen as a two-dimensional matrix. The two-dimensional matrix can have any number of elements, with a higher number of elements allowing more precise stylus position information to be obtained. The image displayed on the display screen 6 is also viewable through the sensing plane. The sensing unit 5 outputs digital position information when the stylus 7 is in contact with the sensing plane and is moved from one section on the image screen to another section. The sensor unit 5 supplies the digitalized output value to the image generator unit 11. The image generator unit 11 generates trace information based on the sensed position information, supplied from the sensor unit 5, and supplies the trace information to the boot controller unit 13.

In this embodiment, the boot controller unit 13 is implemented by a boot control program stored in the BIOS ROM 15, which is run during booting of the computer system 2. In particular, during booting of the computer system 2, the boot controller unit 13 displays the sectioned image as as a plurality of sections, corresponding to the two-dimensional matrix of the sensing plane 5, on the screen 6 of the monitor 1. As the user moves the stylus 7 across the sensing plane 5 from one section of the displayed sectioned image to another section, the pressure sensors of the sensor unit 5 sense the position of the stylus 7, and the image generator unit 11 generates a trace image based on the position information and thereafter supplies the generated trace image to the boot controller unit 13.

The boot controller unit 13 compares the trace image supplied from the image generator unit 11 with the image-based access code stored in the image-based access code storage unit 17 to determine whether the trace image matches the stored image. If the trace image does match the stored image-based access code, the boot controller unit 13 allows the computer system 2 to be booted. However, if the trace image does not match the stored image-based access code, the boot controller unit 13 displays an error message on the monitor and denies access to the computer system 2 (i.e., the computer will not respond to commands or interact). Thus, the boot controller unit 13 authorizes the user when a trace image, stored in advance in the image-based access code storage unit 17, is matched by a trace image input aduring booting up the computer system 2.

The image-based access code storage unit 17 is a readable and writeable CMOS RAM 19. The image-based access code stored in the CMOS RAM 19 can be input after selecting an Input Image-Based Access Code menu item provided in a BIOS Setup screen (not shown). Therefore, initially, a trace image can be stored in the CMOS RAM 19 as an access code when the user selects the Input Image-Based Access Code menu item on the BIOS Setup screen, and thereafter when the user desires to access the computer system 2, the user moves the stylus 7 on the sensing plane 5 to form/allow generation of the predetermined pattern (i.e. the trace image) from one section to another section on the same image used to input the stored image-based access code of the user and displayed in sections on the screen 6 of the monitor 1 and through the sensing plane 5, thereby making a trace image via the image generator unit 11.

Typically, an image-based access code is stored in advance in the CMOS RAM using the same method of generating a trace image as used during normal access to the computer system . In particular, a boot control program is executed after a boot program within the BIOS ROM is executed and connection to peripheral units, including the sensor unit 5, is determined to be in order, when executing the booting program in the BIOS ROM 15 of the computer system 2.

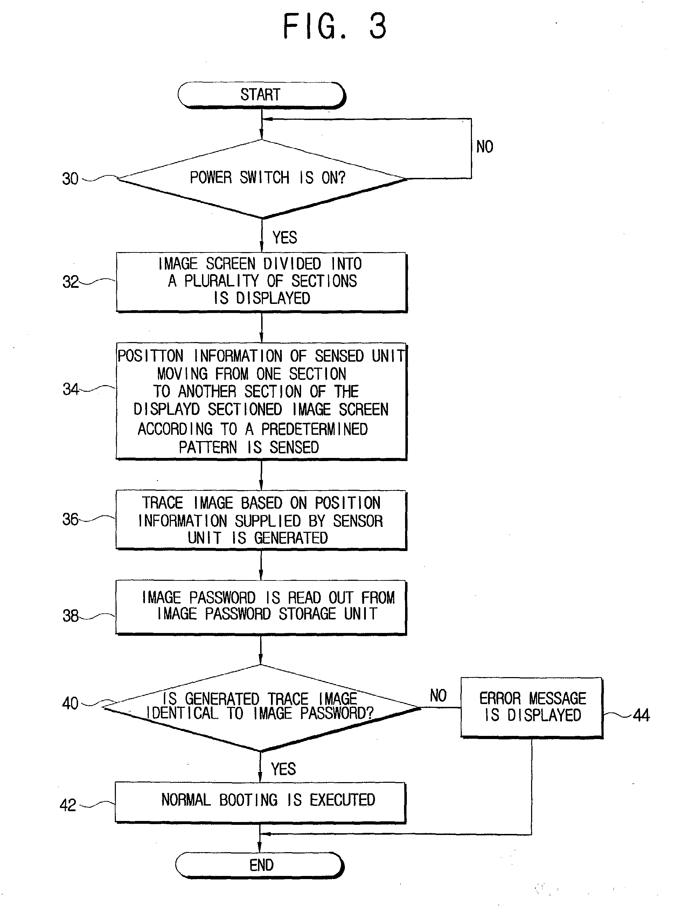

Referring to Figure 3, at operation 30, booting is performed when the computer system's power switch is closed. The boot control program is executed after the initial boot of each unit/component of the computer system 2 is completed. After the initial booting, at operation 32, an image screen, divided into a plurality of sections, is displayed on the display screen 6 of the monitor 1. At operation 34, the user places the stylus 7 on the displayed sectioned image (i.e. the user touches the sensing plane 5 with the stylus 7) and moves the stylus 7 from one section to another section of the displayed image according to a pattern desired by the user (i.e. the pattern that generates a trace corresponding to the stored image-based access code). Therefore, at operation 34, the sensor unit 5 attached to the screen 6 senses the position of the stylus 7 and provides the position information to the image generator unit 11.

At operation 36, the image generator unit 11 generates a trace image based on the position information supplied from the sensor unit 5 and supplies the generated trace image to the boot control program. At operation 38, the boot control program reads the image-based access code stored in the CMOS RAM 19 and compares the read image-based access code with the generated trace. At operation 40, the boot control program determines whether the read image-based access code and the generated trace match.

If the generated trace and the stored image-based access code match, at operation 42, the boot control program performs normal booting by reading the operating system of the computer system 2 from a hard disk 21 to load the operating system in a memory 23. However, if the generated trace does not matched the image-based access code, at operation 44, the boot control program outputs an error message on the screen 6 of the monitor 1, notifying the user of that the entered image-based access code did not match the stored image-based access code and that access to the computer system 1 is denied.

In the above-described embodiment, the sensor unit 5 senses the stylus 7 being pressed against the sensor plane. However, the present invention is not limited to such a configuration and other known sensors suitable for generating a trace from a user's movements with respect to a displayed image can be used as the sensor unit 5, such as (without limitation) a light pen illuminating lights and a light sensor sensing the lights can be employed as the sensor unit 5 in the present invention. Furthermore, for example, the sensor unit 5 could comprise a display apparatus with a sensing (touch) screen, a sensed unit, such a pen, a finger, etc., and an image generator. Furthermore, the image generator unit 11 can be provided as part of the sensor unit 5. Furthermore, although, the above described trace image generation technique uses a see-through sensing matrix (sensing plane 5) on a display screen to map position information of a sensed unit on the sensing matrix to position information in an image displayed on the screen and viewable through the sensing matrix, the present invention is not limited to such a configuration. In particular, in the present invention, any known trace image generation technique using a sensed unit can be used. Furthermore, the sensor unit 5 is in communication with the computer system 2 using known techniques.

Furthermore, in the above-described embodiment, the boot control program of the present invention is executed during the BIOS booting process performed when the power switch is closed. However, the boot control program could be executed allowing the user to input the image-based access code after the operating system has been loaded into the memory 23 or be replaced by a login function of the operating system, which displays a normal initial operating system screen if the input image-based access code (i.e. a generated trace) matches the stored image-based access code.

Further, in the above-described embodiment, the image-based access code is stored in the CMOS RAM 19. However, the present invention is not limited to such configuration and a separate readable and writeable storage unit in communication with or as part of the computer system 2 using known techniques can be used alternatively.

Furthermore, in the above-described embodiment, the sensor unit 5 is mounted on the screen 6 of the monitor. However, the sensor unit 5 can be provided separate (i.e. not attached to the display apparatus 1) from the screen 6. For example, the sensing plane could be positioned horizontally next to the computer system 2 and in communication with the computer system 2. Furthermore, although typically the sensor unit 5 is mounted on the screen 6 and see-through, the present invention is not limited to such a configuration and the sensor unit 5 could also be not see-through. For example, only the sensing matrix could be positioned horizontally next to the computer system 2, wherein typically a user would rely on reproducing from memory a trace (a pattern) based upon the sensing matrix.

Furthermore, in the above-described embodiment, the present invention is employed in desk-top computers, but the present invention can also be applied in portable computers, such as notebook computers, PDAs and palm PCs, and so on.

According to the present invention, access to a computer system by a third party (i.e. an unauthorized user) can be restricted by establishing, as an access code, a trace generated when a sensed unit is moved on an image screen. For example, the trace image can be generated when the image screen is divided into section and the sensed unit is moved from one section to another section of the sectioned image screen. Also, because the booting access code is established by a trace image input by the user, easy misappropriation by the third party is significantly frustrated.

Therefore, the computer system 2 provides a trace image booting access code to control access to the computer system. The processes of the present invention as embodied in the booting controller 13, the image generator 11 and the sensor unit 5 can be implemented in software and/or hardware. In particular, as described above, the present invention provides a computer system with an improved security level, by establishing a booting access code based upon a trace image to prevent unauthorized access to the computer system. The trace image booting access code is formed when a sensed unit is moved from one location to another location on a displayed image screen. Therefore, the security level of a computer system is significantly improved by using a trace image booting access code, which is difficult to misappropriate because, for example, it cannot be orally disclosed to others.

## Claims

1. A method of controlling access to a computer system, the method comprising operating a computer system to:
receive access code data from user input means (5, 7);
compare the access code defined by said data with a pre-stored access code; and
grant further user access to the computer system in the event that said access codes match,
**characterised in that** the received access code data comprises the output of a graphical input device (5, 7) and said access codes comprise data defining curves.

2. A method according to claim 1, including displaying a reference image on a screen (6) to provide a reference for user input of said received access code data.

3. A method according to claim 1 or 2, including displaying the curve represented by the received access code data on a screen (6) while said data is being received.

4. A method of booting a computer system, the method comprising performing a method according to claim 1, 2 or 3 prior to loading an operating system.

5. A method of operating a computer system comprising loading an operating system and performing a method according to claim 1, 2 or 3 after loading said operating system.

6. A computer system including graphical user input means and a display, the computer being programmed to perform a method according to any preceding claim.

7. A computer system according to claim 6, wherein the graphical user input means (5) and the display (6) constitute a touch sensitive display screen.

8. A computer system having a displaying apparatus, comprising:
a sensor main body having a sensing plane, with which a sensed unit is contacted and moved thereon;
a sensor unit sensing the sensed unit contacting the sensing plane and moving thereon;
an image generator generating a trace image along a motion of the sensed unit as sensed by the sensor unit;
an image storage unit storing a predetermined image access code; and
a controller displaying a predetermined image on the displaying apparatus at a booting time of the computer system to allow a user to move the sensed unit in contact with the sensing plane, comparing a trace image, which is generated by the image generator along the moving trace of the sensed unit by the user, with the stored image access code, and allowing the computer system to be booted up if the generated trace image corresponds to the stored image access code.

9. The computer system according to claim 8, wherein the displayed predetermined image is divided into a plurality of sections and the sensed unit is moved from one section to another section of the sectioned displayed predetermined image.

10. The computer system according to claim 8, wherein the image access code comprises a motion starting point of the sensed unit and an ending point thereof.

11. The computer system according to claim 9, wherein the image access code comprises a motion starting point of the sensed unit and an ending point thereof.

12. The computer system according to claim 8, wherein the sensor unit has a multiplicity of pressure sensors respectively corresponding to a multiplicity of position addresses on the sensing plane.

13. The computer system according to claim 8, wherein the sensed unit is a light pen illuminating lights, and
wherein the sensor unit has a multiplicity of light sensors respectively corresponding to a multiplicity of position addresses on the sensing plane and sensing the lights illuminated by the light pen.

14. The computer system according to claim 8, wherein the image generator unit is an electronic pen recognizing movements of the pen on the sensing plane in real time and displaying the movements as an image.

15. The computer system according to claim 8, wherein the image access code storage unit is provided within a CMOS RAM, and the controller reads the image access code from the CMOS RAM at the time of booting the computer system and compares the read image access code with the trace image generated by the image generator.

16. A method of controlling booting of a computer system having a displaying apparatus equipped with a sensor unit on a display screen of the displaying apparatus and through which an image is displayed, comprising:
displaying a predetermined image screen at a time of booting the computer system;
choosing a sensed unit to move the sensed unit on the image screen; sensing a contacted position according to a motion trace of the sensed unit on the image screen;
generating a trace image based on the sensed contacted position information; reading an image access code stored in advance; and
allowing the computer system to be booted if the generated trace image corresponds to the read image access code after a comparison.

17. The method according to claim 16, wherein the image screen is divided into a plurality of sections and the sensed unit is moved from one section to another section of the sectioned image screen.

18. The method according to claim 16, wherein the image access code comprises a motion starting point of the sensed unit and an ending point thereof.

19. The method according to claim 17, wherein the image access code comprises a motion starting point of the sensed unit and an ending point thereof.

20. The method according to claim 16, further comprising displaying an error message if the generated trace image does not correspond to the image access code.

21. A computer providing a trace image booting access code to control interaction with the computer.

22. A computer system, comprising:
a display screen displaying an image;
a sensing plane, through which the image is viewable, positioned on the display screen and sensing movement of a sensed unit contacting the sensing plane; an image generator generating a trace image based upon the displayed image and corresponding to the movement of the sensed unit; and
a controller comparing the generated trace image with a stored image based upon the displayed image and booting up the computer in response to the comparison.

23. A computer, comprising:
a sensing display screen displaying an image and sensing movement of a sensed unit contacting the screen;
an image generator generating a trace image based upon the displayed image and corresponding to the movement of the sensed unit; and
a controller comparing the generated trace image with a stored image based upon the displayed image and booting up the computer in response to the comparison.

24. A computer, comprising:
means for generating a trace image based upon a displayed image according to movement of a sensed unit on a sensing display screen displaying the image; and
means for booting up the computer if the generated trace image corresponds to a stored image.
